# EUROPEAN PATENT APPLICATION

(11) **EP 3 644 472 A1**
(43) Date of publication of application: **29.04.2020**
(21) Application number: 18202163.4
(22) Date of filing: 23.10.2018
(51) Int. Cl.: H02J 3/32, H02J 3/38, H02J 3/48

(54) **POWER CONVERSION**

(71) Applicant: Lavis, Ian, Haverfordwest, Pembrokeshire SA61 1DL (GB); Hamilton, Robert, Bedford, Bedfordshire MK42 7BN (GB)
(72) Inventor: Lavis, Ian, Haverfordwest, Pembrokeshire SA61 1DL (GB); Hamilton, Robert, Bedford, Bedfordshire MK42 7BN (GB)
(74) Representative: Wynne-Jones IP Limited

(57) **Abstract**

A power conversion apparatus (10) is described comprising frequency monitoring device (18) operable to monitor a frequency of an electrical supply in a supply network (12), and a bi-directional converter (16) operable when the monitored frequency is less than a first predetermined level to convert a direct current electrical supply to a converted alternating current supply for supply to the network (12), the bi-directional converter (16) including phase and frequency adjustment means (24) operable to match the phase and frequency of the converted alternating current supply to those of the electrical supply of the supply network (12), the converter (16) being operable when the monitored frequency is greater than a second predetermined level to convert excess alternating current electrical power from the network (12) to a converted direct current supply. An associated power conversion method is also described.

## Description

This invention relates to power conversion, and in particular to a power conversion apparatus and associated method for use in association with an electricity supply and distribution network.

The electricity supply and distribution network, known in the United Kingdom as the national grid, is used to distribute electricity between generators and consumers. Traditionally, the generators have taken the form of large power stations, for example of nuclear, coal or gas fired form. As the outputs from such generators are large, only a relatively small number of such generators have traditionally been on-line, supplying electrical power to the network at any given time. Furthermore, their outputs are predictable and so the supply to the network is predictable. More recently, especially with the advent of renewables-based generation schemes such as solar and wind farms, the number of generators supplying power to the network has increased significantly. Furthermore, the nature of the renewables-based generation schemes is such that the level of power supplied to the network varies significantly over time, depending upon environmental conditions.

The electricity supplied over the supply and distribution network is an alternating current supply, supplied at a nominal frequency of 50Hz. Variations in the outputs of the generators supplying electrical power to the network, or variations in the requirements of consumers receiving electrical power from the network, can impact upon the actual supply frequency. In the event that the frequency drops below the nominal 50Hz level, for example as a result of demand outstripping supply, then additional electrical power may be supplied to the network in order to increase the actual supply frequency in an attempt to maintain the frequency at as close a level as possible to the nominal 50Hz level. In order to quickly supply electrical power to the network, additional generators may be required to be kept in a stand-by mode, ready for rapid deployment. Clearly, keeping additional generators on stand-by in this manner is costly, and so is undesirable.

Where the actual supply frequency increases above the nominal 50Hz level, then excess electrical power may be removed from the network. However, this represents a waste of energy, reducing the efficiency of the network, and so is undesirable.

Systems are envisaged whereby rechargeable batteries or other storage devices may be used to store excess electrical power at times when there is excess electrical power available in the network, additional power being deployed from the batteries or other stores to the network at times when demand outstrips supply, thereby aiding in maintaining the supply frequency at as close a level as possible to the nominal 50Hz level. Power conversion arrangements are required to convert the direct current output of a rechargeable battery to the alternating current carried by the network, matching the output phase and frequency to that of the network at any given time. Power conversion arrangements are also required to convert the alternating current supply from the network to direct current for storage by the battery. It is an object of the invention to provide a power conversion arrangement of relatively simple and convenient form and in which at least some of the disadvantages associated with known power conversion arrangements are addressed.

According to the present invention there is provided a power conversion apparatus comprising frequency monitoring device operable to monitor a frequency of an electrical supply in a supply network, and a bi-directional converter operable when the monitored frequency is less than a first predetermined level to convert a direct current electrical supply to a converted alternating current supply for supply to the network, the bi-directional converter including phase and frequency adjustment means operable to match the phase and frequency of the converted alternating current supply to those of the electrical supply of the supply network, the converter being operable when the monitored frequency is greater than a second predetermined level to convert excess alternating current electrical power from the network to a converted direct current supply.

The use of the bi-directional converter of the apparatus in accordance with the invention is advantageous in that duplication of circuit parts is reduced thereby allowing the apparatus to be of relatively simple form. Furthermore, as the power conversion apparatus includes a frequency monitoring device, and the operation of the bi-directional converter is controlled in response to the output of the frequency monitoring device, the power conversion apparatus may be arranged to operate automatically, in use, not requiring an operator to instruct it to switch between operating modes.

The apparatus preferably further comprises a battery or other store to or from which the direct current may be supplied or drawn, in use.

The first and second predetermined levels may be the same as one another. By way of example, where the system is used in the United Kingdom where the nominal supply frequency is 50Hz, the first and second predetermined levels may both be 50Hz. However, where used in other countries where the supply frequency differs, or where a greater range of operating frequencies is permitted, the first and second predetermined levels may be set at a different level and may differ from one another.

Preferably, when the supply frequency as detected using the frequency monitoring device is less than the first predetermined level, the amount of electrical power supplied to the network from the power conversion apparatus is controlled so as to be proportional to the difference between the measured frequency and the nominal supply frequency of the network.

As the supply frequency returns toward the nominal frequency, the amount of electrical power supplied to the network from the power conversion apparatus is preferably gradually reduced.

Preferably, when the supply frequency as detected using the frequency monitoring device is greater than the second predetermined level, the amount of electrical power drawn from the network by the power conversion apparatus is controlled so as to be proportional to the difference between the measured frequency and the nominal supply frequency of the network. As the supply frequency returns toward the nominal frequency, the amount of electrical power drawn from the network by the power conversion apparatus is preferably gradually reduced.

It will be appreciated that controlling the operation of the power conversion apparatus in this manner is advantageous in that switching in and out the operation of the power conversion apparatus does not result in sudden shocks or changes to the operation of the network which could otherwise impact upon the operation of other devices connected to the network.

The power conversion apparatus preferably further comprises electrical power generation means having an alternating current output. Preferably the power generation means is operable to supply electrical power to the network in the event that the supply frequency is lower than the first predetermined level and the bi-directional power converter and store are unable to supply sufficient additional power to the network to increase the supply frequency to the nominal level. Where such electrical power generation means are provided, the power conversion apparatus is preferably controllable in such a fashion as to allow the output from the electrical generation means to be supplied to the bi-directional power converter for use in charging the battery.

According to another aspect of the invention there is provided a power conversion method comprising monitor a frequency of an electrical supply in a supply network, and controlling a bi-directional converter such that when the monitored frequency is less than a first predetermined level the bi-directional converter is operated to convert a direct current electrical supply to a converted alternating current supply for supply to the network, the converted alternating current supply having a phase and frequency adjusted to match the phase and frequency of the electrical supply of the supply network, and when the monitored frequency is greater than a second predetermined level the bi-directional converter is operated to convert excess alternating current electrical power from the network to a converted direct current supply.

The invention will further be described, by way of example, with reference to the accompanying drawings, in which:
Figure 1 is a diagrammatic view illustrating a power converter apparatus in accordance with an embodiment of the invention;
Figure 2 is a circuit diagram illustrating a power converter apparatus in accordance with an embodiment of the invention;
Figure 3 is a circuit diagram of the bi-directional converter illustrated in figure 2; and,
Figure 4 is a circuit diagram of the heat exchange block illustrated in figure 2.

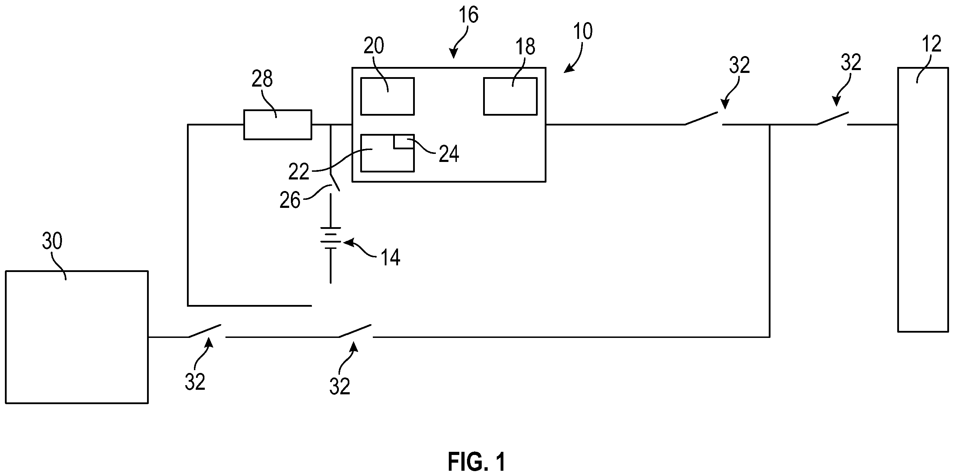

Referring to Figure 1, a power conversion apparatus 10 is illustrated, the apparatus 10 being arranged for use in conjunction with an electrical power supply network 12, for example the national grid of the United Kingdom. The network 12 has a number of electrical generators (not shown) connected thereto, operable to supply electrical power to the network 12, and a number of consumers (not shown) connected thereto and receiving electrical power from the network 12. As described hereinbefore, certain of the generators may take the form of, for example, solar or wind farms, or other renewables-based generators, the outputs of which are variable and, in many cases, unpredictable. The demands of the consumers may also vary over time, and such variations may be unpredictable. The network 12 is controlled in such a manner that the nominal supply frequency thereof is 50Hz, the operator being permitted a small, say 1% variance from this level. When the network demand exceeds the network supply, then the supply frequency will drop. When the network demand is lower than the network supply, and so the network contains excess electrical power, the supply frequency will increase.

The power conversion apparatus 10 comprises an electrical energy store 14 in the form of one or more electrical batteries or the like. The apparatus 10 further comprises a bi-directional power converter 16 interposed between the store 14 and the network 12. The power converter 16 includes a phase and frequency detection or monitoring unit 18 operable to monitor the supply phase and frequency of the network and to control the operation of the power converter 16 in response to the detected frequency. The power converter 16 further includes a rectifier circuit 20 whereby an alternating current supply from the network 12 can be converted to a direct current supply for storage by the store 14. Additionally, the power converter 16 comprises a conversion or inverter circuit 22 operable to convert a direct current output from the store 14 to a converted alternating current output for supply to the network 12, the conversion circuit 22 including a phase and frequency controlling section 24 operable to adjust the phase and frequency of the converted alternating current supply to substantially match the phase and frequency of the network supply as detected by the unit 18.

Although the unit 18 is described and illustrated as forming part of the converter 16, it will be appreciated that it may be located remotely therefrom, if desired.

In use, the unit 18 monitors the supply phase and frequency of the network 12. In the event that the supply frequency falls below a predetermined threshold value, then the bi-directional power converter 16 operates to boost the supply to the network 12 by supplying electrical power thereto from the store 14, the power converter 16 converting the output from the store 14 to a converted alternating current supply at a phase and frequency substantially matching that of the network 12. The amount of electrical energy supplied to the network 12 in this manner is controlled in such a manner as to be proportional to the difference between the network frequency as detected by the unit 18 and the nominal frequency. By way of example, where the nominal network frequency is 50Hz and the measured frequency is 49.8Hz, the conversion apparatus 10 may be arranged to supply an output of 44kW for example, to the network, and if the measured frequency drops to 49.7Hz, the supply to the network may be increased to 66kW, etc. As the measured frequency returns towards 50Hz, the supply from the store 14 to the network 12 is gradually reduced. Conveniently, at no point is the supply from the store 14 to the network 12 suddenly switched off, but rather it is gradually reduced, so as to avoid introducing sudden changes or shocks to the network supply which could negatively impact upon the network 12 or other devices connected thereto.

In the event that the supply frequency as detected by the unit 18 rises above a predetermined threshold value, then the bi-directional power converter 16 preferably operates to draw electrical energy from the network 12, the power converter 16 converting the supply to a converted direct current supply for storage by the store 14. In a manner similar to that described above, the amount of electrical energy drawn from the network 12 in this manner is controlled in such a manner as to be proportional to the difference between the network frequency as detected by the unit 18 and the nominal frequency. By way of example, where the nominal network frequency is 50Hz and the measured frequency is 50.2Hz, then the conversion apparatus 10 may be arranged to draw 44kW of electrical power from the network, and if the measured frequency rises to 50.3Hz, the supply drawn from the network to the store 14 may be increased to 66kW, etc. As the measured frequency returns towards 50Hz, the supply drawn from the network 12 to the store 14 is gradually reduced. Again, at no point is the supply from the network 12 to the store 14 suddenly switched off, but rather it is gradually reduced, so as to avoid introducing sudden changes or shocks to the network supply which could negatively impact upon the network 12 or other devices connected thereto.

If the network frequency remains greater than the predetermined level for an extended period of time then there is the possibility that the store 14 will reach capacity and no longer be able to store further energy. In these circumstances, a switch 26 will be opened to disconnect the store 14 from the power converter 16, and instead the converted direct current supply will be dissipated through a large resistance resistor 28 to ground. Clearly, as this represents a permanent energy loss, it should be avoided if possible in order to enhance system efficiency.

As illustrated, the apparatus 10 further comprises an electrical generator 30. The generator 30 may take a wide range of forms. It preferably comprises a so-called G59 generator, and consequently its output takes the form of an alternating current output, the frequency and phase of which are matched to the frequency and phase of the network 12. For example, it may comprise a fossil fuel powered generator. It is envisaged that a generator with an output in the region of 440kW would be suitable for use in the invention, but generators with higher or lower outputs than this are possible without departing from the scope of the invention.

In the event that the network frequency has fallen below the predetermined threshold and insufficient power can be supplied to the network 12 from the store 14, for example as a result of the store 14 having substantially completely discharged or as a result of the network frequency having dropped to such an extent that it cannot be remedied using the store 14 alone, then the generator 30 may be used to supply additional electrical power to the network 12.

It is envisaged that the conversion apparatus 10 will be able to continuously draw electrical power from the network for storage in the store 14 for 30 minutes, and the capacity of the store 14 is selected accordingly. Similarly, it is envisaged that the conversion apparatus 10 should be able to continuously supply power to the network 12 for 30 minutes. Since, at any given time, the network frequency could rise or fall, it is desired that when the conversion apparatus 10 is inactive as the network frequency is at 50Hz, the store 14 should be at around 50% capacity. Adjustments to the charge level of the store 14 may be achieved, when desired, through partially discharging the store 14 through the resistor 28 or through the use of the generator 30.

As illustrated in Figure 1, a number of isolation switches 32 may be provided to allow isolation of parts of the apparatus 10 when required. Certain of the switches 32 may be directly controlled by the generator 30.

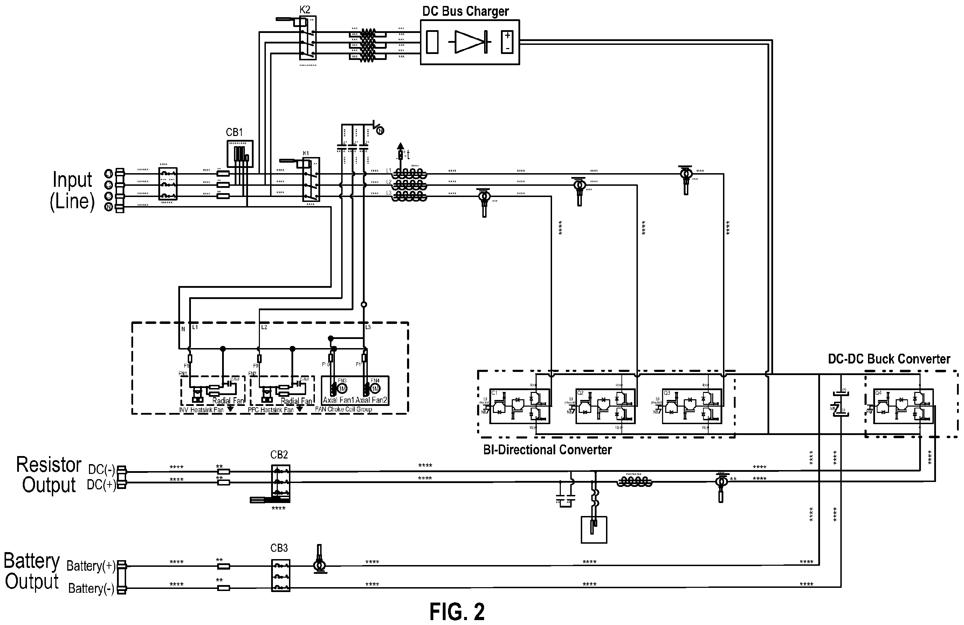

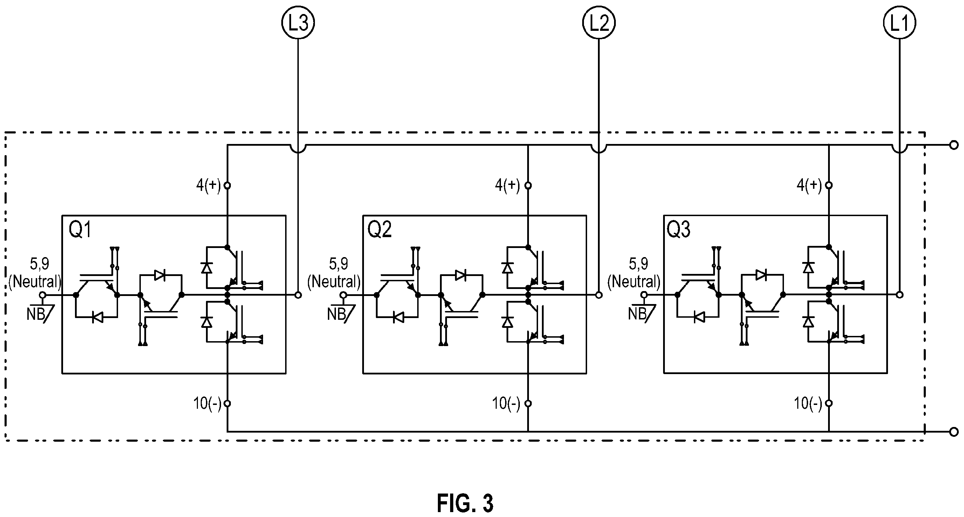

Referring to Figure 2, a circuit diagram of a power converter apparatus is illustrated. The apparatus may comprise a line input having input terminals L1-L3 for providing a three-phase connection with the national grid. The line input may be connected with a DC bus charger via an input circuit breaker CB1 and DC bus bar charge contactor K2 for rectifying AC power fed from the line input and then supplying rectified power to the battery via a circuit breaker CB3. The voltage provided via the line input may be sensed by an input voltage sensor. The apparatus may further comprise a bi-directional converter (described below and in relation to figure 3), a DC-DC buck converter, a resistor output and battery output. The DC-DC buck converter may be connected with the resistor output via an output circuit breaker CB2. The line input may further be connected with a heat exchange block via an input contactor K1. Between the resistor output and DC-DC buck converter an output voltage sensor may be provided.

Referring to Figure 3, a bi-directional converter is illustrated. The converter may comprise three converting blocks Q1, Q2, Q3. Each block may comprise an arrangement of transistor-diode pairs and respective network terminals for connecting to the line terminals L1-L3 of the national grid. Each of the transistors in the block comprises respective gate terminal for receiving control signals.

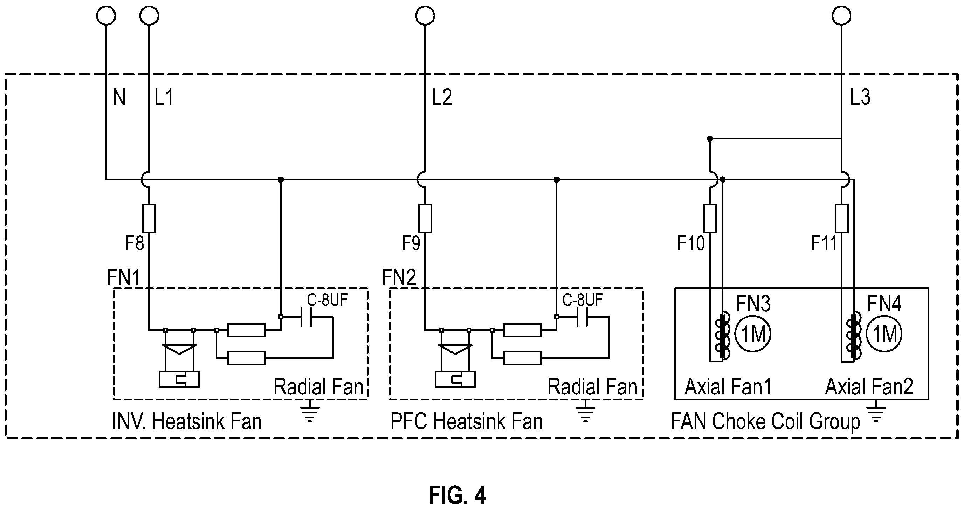

Referring to Figure 4, a heat exchange block is illustrated. The heat exchange block comprises an inverter heatsink fan, which may be connected with the input terminal L1 via a resistor F8, a power factor correction (PFC) heatsink fan which may be connected with the input terminal L2 via a resistor F9, and a fan choke coil group which may be connected with the input terminal L3. The inverter heatsink fan and PFC heatsink fan may further comprise respective radial fans. The fan choke coil group may comprise two axial fans connected with the input terminal L3 via respective resistors F10, F11.

It will be appreciated that the arrangement described hereinbefore is advantageous in that it allows improved maintenance of the network frequency at or around its nominal operating frequency in a relatively simple and convenient form, requiring no or minimal operator interaction. By storing excess supply, and using that excess energy at time of excess demand or insufficient supply, it will be appreciated that the amount of energy wasted can be reduced, and so efficiency can be enhanced.

Whilst a specific embodiment of the invention has been described hereinbefore, it will be appreciated that a wide range of modifications and alterations may be made thereto without departing from the scope of the invention as defined by the appended claims.

## Claims

1. A power conversion apparatus comprising frequency monitoring device operable to monitor a frequency of an electrical supply in a supply network, and a bi-directional converter operable when the monitored frequency is less than a first predetermined level to convert a direct current electrical supply to a converted alternating current supply for supply to the network, the bi-directional converter including phase and frequency adjustment means operable to match the phase and frequency of the converted alternating current supply to those of the electrical supply of the supply network, the converter being operable when the monitored frequency is greater than a second predetermined level to convert excess alternating current electrical power from the network to a converted direct current supply.

2. An apparatus according to Claim 1, further comprising a battery or other store.

3. An apparatus according to Claim 1 or Claim 2, wherein the first and second predetermined levels are the same as one another.

4. An apparatus according to any of the preceding claims, wherein when the supply frequency as detected using the frequency monitoring device is less than the first predetermined level, the amount of electrical power supplied to the network from the power conversion apparatus is controlled so as to be proportional to the difference between the measured frequency and the nominal supply frequency of the network.

5. An apparatus according to Claim 4, wherein as the supply frequency returns toward the nominal frequency, the amount of electrical power supplied to the network from the power conversion apparatus is gradually reduced.

6. An apparatus according to any of the preceding claims, wherein when the supply frequency as detected using the frequency monitoring device is greater than the second predetermined level, the amount of electrical power drawn from the network by the power conversion apparatus is controlled so as to be proportional to the difference between the measured frequency and the nominal supply frequency of the network.

7. An apparatus according to Claim 6, wherein as the supply frequency returns toward the nominal frequency, the amount of electrical power drawn from the network by the power conversion apparatus is gradually reduced.

8. An apparatus according to any of the preceding claims, further comprising electrical power generation means having an alternating current output, wherein the power generation means is operable to supply electrical power to the network in the event that the supply frequency is lower than the first predetermined level and the bi-directional power converter and store are unable to supply sufficient additional power to the network to increase the supply frequency to the nominal level.

9. An apparatus according to Claim 8, wherein the power conversion apparatus is controllable in such a fashion as to allow the output from the electrical generation means to be supplied to the bi-directional power converter.

10. A power conversion method comprising monitor a frequency of an electrical supply in a supply network, and controlling a bi-directional converter such that when the monitored frequency is less than a first predetermined level the bi-directional converter is operated to convert a direct current electrical supply to a converted alternating current supply for supply to the network, the converted alternating current supply having a phase and frequency adjusted to match the phase and frequency of the electrical supply of the supply network, and when the monitored frequency is greater than a second predetermined level the bi-directional converter is operated to convert excess alternating current electrical power from the network to a converted direct current supply.

11. A method according to Claim 10, wherein the first and second predetermined levels are the same as one another.

12. A method according to any of Claims 10 to 11, wherein when the supply frequency is less than the first predetermined level, the amount of electrical power supplied to the network from the bi-directional converter is controlled so as to be proportional to the difference between the measured frequency and the nominal supply frequency of the network.

13. A method according to Claim 12, wherein as the supply frequency returns toward the nominal frequency, the amount of electrical power supplied to the network from the bi-directional converter is gradually reduced.

14. A method according to any of Claims 10 to 13, wherein when the supply frequency is greater than the second predetermined level, the amount of electrical power drawn from the network by the bi-directional converter is controlled so as to be proportional to the difference between the measured frequency and the nominal supply frequency of the network.

15. A method according to Claim 14, wherein as the supply frequency returns toward the nominal frequency, the amount of electrical power drawn from the network by the bi-directional converter is gradually reduced.
